(19) Europäisches Patentamt
European Patent Office
Office européen des brevets

(11) **EP 4 105 268 A1**

(12) **EUROPEAN PATENT APPLICATION**

(43) Date of publication:
**21.12.2022 Bulletin 2022/51**

(21) Application number: **22177373.2**

(22) Date of filing: **06.06.2022**

(51) International Patent Classification (IPC):
*C08J 9/28* (2006.01)          *H01M 50/00* (2021.01)
*H01M 50/414* (2021.01)      *C08F 122/10* (2006.01)
*C09D 11/30* (2014.01)

(52) Cooperative Patent Classification (CPC):
**C08J 9/286; C08F 122/10; C09D 11/101;
C09D 11/36; C09D 11/40; H01M 50/414;**
C08J 2333/24; C08J 2335/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.06.2021 JP 2021098946**

(71) Applicant: **Ricoh Company, Ltd.
Tokyo 143-8555 (JP)**

(72) Inventors:
• **ARITA, Manabu
Tokyo, 143-8555 (JP)**
• **Takauji, Keigo
Tokyo, 143-8555 (JP)**
• **Ohkimoto, Miku
Tokyo, 143-8555 (JP)**

(74) Representative: **Marks & Clerk LLP
15 Fetter Lane
London EC4A 1BW (GB)**

(54) **LIQUID COMPOSITION SET, POROUS RESIN PRODUCING APPARATUS AND METHOD FOR PRODUCING POROUS RESIN**

(57)     A liquid composition set is provided including a liquid composition X containing a polymerizable compound X and a solvent X, and a liquid composition Y containing a solvent Y. The liquid composition X forms a porous resin. A surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the following equation (1): Surface tension Y - Dynamic surface tension $X_{1500} \geq 0.4$ mN/m ... Equation (1).

Fig. 1

**Description**

BACKGROUND

Technical Field

Embodiments of this disclosure relate to a liquid composition set, a porous resin producing apparatus and a method for producing porous resin.

Description of the Related Art

Generally, porous resins can be utilized in a variety of applications. As an example, a porous resin can provide a separation layer that transmits or blocks only a specific substance by appropriately selecting the shape and size of the pores, surface properties of the frame portion, etc., of the porous resin. As another example, a porous resin can provide an efficient reaction field or storage place for gases or liquids taken in from the outside by utilizing the vast surface area and void volume of the porous resin. Therefore, if it is possible to provide a liquid composition for forming a porous resin, which is excellent in handleability and is easy to apply to various places, the applications of the porous resin are greatly expanded.

As an example of such a liquid composition for forming a porous resin, for example, Japanese Patent No. 4426157 discloses a porous-body-forming photo-curable resin composition including a photopolymerizable monomer (A), an organic compound (B) incompatible with the photopolymerizable monomer (A), a common solvent (C) compatible with both the photopolymerizable monomer (A) and the organic compound (B), and a photopolymerization initiator (D), as essential components.

However, in a case in which the liquid composition for forming a porous resin is used in combination with another liquid composition, there has been a concern that surface uniformity of a resultant porous resin may be lowered depending on the combination of the liquid compositions if the liquid composition for forming the porous resin comes into contact with the other liquid composition.

SUMMARY

Embodiments of the present invention provides a liquid composition set including: a liquid composition X to form a porous resin, containing a polymerizable compound X and a solvent X; and a liquid composition Y containing a solvent Y. A surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the following equation (1):

$$\text{Surface tension Y} - \text{Dynamic surface tension } X_{1500} \geq 0.4 \text{ mN/m ... Equation (1).}$$

Embodiments of the present invention provides a porous resin producing apparatus. The porous resin producing apparatus includes: an accommodating container Y containing a liquid composition Y containing a solvent Y; an application device Y configured to apply the liquid composition Y contained in the accommodating container Y; an accommodating container X containing a liquid composition X containing a polymerizable compound X and a solvent X; an application device X configured to apply the liquid composition X contained in the accommodating container X to a region to which the liquid composition Y has been applied; and a curing device configured to cure the applied liquid composition X. A surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the above equation (1):

Embodiments of the present invention provides a method for producing porous resin. The method includes: applying a liquid composition Y containing a solvent Y; applying a liquid composition X containing a polymerizable compound X and a solvent X to a region to which the liquid composition Y has been applied; and curing the applied liquid composition X. A surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the above equation (1).

According to embodiments of the present invention, when a liquid composition for forming a porous resin is used in combination with another liquid composition, a liquid composition set excellent in surface uniformity of the resultant porous resin can be provided even if the liquid composition for forming the porous resin comes into contact with the other liquid composition.

BRIEF DESCRIPTION OF THE DRAWING

A more complete appreciation of the disclosure and many of the attendant advantages and features thereof can be readily obtained and understood from the following detailed description with reference to the accompanying drawing, wherein:
the drawing is a schematic diagram illustrating an example of a porous resin producing apparatus for achieving a method for producing porous resin according to an embodiment of the present invention.

The accompanying drawing is intended to depict embodiments of the present disclosure and should not be interpreted to limit the scope thereof. The accompanying drawing is not to be considered as drawn to scale unless explicitly noted.

DETAILED DESCRIPTION OF EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to the accompanying drawing. In describing embodiments illustrated in the drawing, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

Hereinafter, an embodiment of the present invention will be explained.

[Liquid Composition Set]

A liquid composition set includes a liquid composition X and a liquid composition Y, and may optionally include other liquid compositions as needed. In the liquid composition set, it is sufficient that the liquid composition X and the liquid composition Y are each independently present in a liquid state, and the configuration is not limited to a case in which a container filled with the liquid composition X and a container filled with the liquid composition Y are integrated, or the like. For example, even if the liquid composition X and the liquid composition Y are each charged in an independent container, the concept of the liquid composition set involves a case in which combination use of the liquid composition X and the liquid composition Y is presupposed, a case in which combination use of the liquid composition X and the liquid composition Y is substantially induced, and the like. The liquid composition X and the liquid composition Y have different compositions.

The liquid composition set forms a porous resin when a polymerizable compound or the like as one compound of the liquid composition X constituting the liquid composition set is cured (polymerized). Therefore, the liquid composition set is preferably used for forming a porous resin. The meaning of "the liquid composition set forms a porous resin" is not particularly limited as long as the porous resin is formed as a result of using the liquid composition set in a manner that the liquid composition X and the liquid composition Y come into contact with each other. Specifically, for example, the following case is included in the meaning of "the liquid composition set forms a porous resin": a case in which the liquid composition X and the liquid composition Y are applied in a manner that they come into contact with each other, and as a result, the porous resin is formed only in a region to which the liquid composition X has been applied and another region where the liquid composition X and the liquid composition Y have come into contact with each other, and the liquid composition set forms the porous resin even if no porous resin has been formed in the region to which the liquid composition Y has been applied (excluding the region where the liquid composition X and the liquid composition Y have come into contact with each other). More specifically, for example, even if a material that forms a porous resin through curing (polymerization) of the polymerizable compound is included in the liquid composition X but not included in the liquid composition Y, the liquid composition set forms the porous resin as long as the porous resin is formed as a result of using the liquid composition set. Note that the meaning of "the liquid composition set forms a porous resin" includes a case in which some components (e.g. polymerizable compounds) of the liquid composition X constituting the liquid composition set is cured (polymerized) to form a porous resin but the remaining components (e.g. solvents) of the liquid compositions constituting the liquid composition set are not cured to form no porous resin, or the like.

The liquid composition set is used for an application presupposing the contact of the liquid composition as a constituent of the liquid composition set for forming a porous resin (liquid composition X) with the other liquid composition (liquid composition Y). A reason why the liquid composition set of the present disclosure is preferably used in such a case will be described below.

There is a concern that the surface uniformity of the resultant porous resin may be lowered if a liquid composition for forming a porous resin comes into contact with another liquid composition. More specifically, for example, in a case in which the liquid composition for forming a porous resin is applied to a porous substrate to form a porous resin on the porous substrate, the concern emerges. In such a case, for the purpose of suppressing permeation of the liquid composition for forming a porous resin into the porous substrate to form the porous resin on the porous substrate, another liquid composition is applied to the porous substrate in advance. However, when the liquid composition for forming a porous resin whose properties (e.g. surface tension) have not been properly adjusted comes into contact with another liquid composition, the liquid composition for forming a porous resin may permeate the other liquid composition depending on the time until a liquid composition for forming the porous resin hardens or an amount of the applied liquid composition for forming the porous resin, and as a result, surface uniformity of the resultant porous resin may be lowered. In such a case, a case in which the surface uniformity of the porous resin is low may include a state in which small holes (pinholes) are generated in a partial region of the porous resin and the underlying porous substrate is thereby exposed, and the like.

Thus, a liquid composition set is demanded, in which, even if a liquid composition for forming a porous resin comes into contact with another liquid composition, permeability of the liquid composition for forming a porous resin into the other liquid composition is suppressed and surface uniformity of the resultant porous resin is excellent. Examples of such a liquid composition set may include a liquid composition set that, when the liquid composition for forming a porous resin is defined as the liquid composition X and the other liquid composition is defined as the liquid composition Y, satisfies the following equation (1) regarding a surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method.

$$\text{Surface tension Y} - \text{Dynamic surface tension } X_{1500} \geq 0.4 \text{ mN/m ... Equation (1)}$$

Examples of applications where the liquid composition X and the liquid composition Y are applied to a porous substrate to form a porous resin on the porous substrate may include an application for producing a power storage element. Specifically, the liquid composition Y as a base liquid is applied to an active material layer that is a porous substrate on a current collecting foil, to fill voids in the active material layer, and then the liquid composition X is applied onto the active material layer containing the liquid composition Y to form a porous resin, so that the porous resin functionally serves as a separator. When the porous resin is used for producing such a power storage element, small holes (pinholes) hardly occur in the separator, so that short circuit can be prevented in the power storage element.

In this disclosure, the surface tension according to the plate method refers to a surface tension measured using a platinum plate according to Wilhelmy method, in which the liquid composition is injected into a petri dish, and then a value measured after 1 minute is adopted. For example, an automatic surface tensiometer (DY-300, manufactured by Kyowa Interface Science Co., Ltd.) can be used to measure the surface tension. In addition, for example, a dynamic surface tensiometer (DynoTesterm, manufactured by SITA Messtechnik GmbH) can be used to measure the dynamic surface tension. Examples of the method in which equation (1) is satisfied may include, but are not limited to, a method using the liquid composition X containing an appropriate surfactant, and the like, as described below.

The liquid composition set satisfies preferably the following equation (3), more preferably the following equation (3a), regarding the surface tension X of the liquid composition X at 24°C according to the plate method and the surface tension Y of the liquid composition Y at 24°C according to the plate method.

$$\text{Surface tension Y} - \text{Surface tension X} \leq 3.0 \text{ mN/m ... Equation (3)}$$

$$\text{Surface tension Y} - \text{Surface tension X} \leq 1.0 \text{ mN/m ... Equation (3a)}$$

The reason why it is preferable for the liquid composition set to satisfy equation (3) will be explained.

As described above, in a case in which the liquid composition Y is applied to the porous substrate in advance, the voids in the porous substrate are filled with a sufficient amount of the liquid composition Y and then the liquid composition X for forming the porous resin is applied to the porous substrate to form the porous resin on the porous substrate, an unintended streak (groove)-like structure portion may be formed on the surface of the porous resin when the liquid composition X is applied using e.g. an inkjet method. This is because, for example, when an inkjet discharge device (inkjet head) with a plurality of nozzle rows is used to discharge droplets of liquid composition X, landing timings of the droplets are different depending on an arrangement of the nozzle rows discharging the droplets, and dilution rates of the droplets generated by mixing with the liquid composition Y after the landing are different for each dot row corresponding to the nozzle rows. Specifically, for example, since the dot rows formed by the droplets of the liquid composition X that have initially landed on the liquid layer formed by the liquid composition Y, the droplets of the liquid composition X are diluted due to difference in the surface tension between the liquid composition X and the liquid composition Y, so that the dots thinly spread. As a result, a porosity of the resultant porous resin is increased, and grooves are more easily caused. On the other hand, droplets of another liquid composition X, which land later than the droplets of the liquid composition X, which have initially landed have a small difference in the surface tension and dots that are hard to spread because the liquid composition X that has initially landed thinly spreads and therefore lands on the newly formed liquid layer. As described above, unintended groove-like structure portions may be formed on the surface of the porous resin. If the porous substrate or the inkjet discharge device moves during the formation of the dot rows, the grooves may become continuous streaks. Specifically, in a case of using a 600-dpi inkjet head including four 150-dpi nozzle rows, when the droplets are diluted on the initial first row, streaks with 150 dpi are caused, and when the droplets are diluted on the initial second row, streaks with 300 dpi are caused.

In contrast, when using the liquid composition set that satisfies equation (3), on the surface of the liquid layer formed by the liquid composition Y, substitution of the liquid composition Y for the liquid composition X (spreading of the dots of the liquid composition X) can be suppressed after the landing of the liquid composition X. Even if the liquid composition Y is substituted with the liquid composition X, behavior of the droplets of the liquid composition X, which have landed later can be suppressed before and after the substitution, and a dilution degree of each droplet is uniformized. As a result, the unintended streak (groove)-like structure portions are prevented from forming on the surface of the porous resin.

When the liquid composition set satisfies equation (3) and also satisfies equation (2) described below, formation of the streak (groove)-like structure portions on the surface of the porous resin can be more suppressed, and furthermore, the liquid composition X can be prevented from permeating the liquid composition Y. This makes it possible to suppress, for example, unintended decrease in a film thickness (decrease in separator performance) and increase in battery resistance due to the porous substrate (active material layer) being covered by the porous resin (separator) when the porous resin formed by the liquid composition set is used as the separator of the power storage element, and furthermore to thin the film of the porous resin (separator), so that low resistance and low cost can be achieved.

If the amount of the liquid composition Y that is previously applied to the porous substrate is decreased to suppress the dilution of the droplets, small holes (pinholes) resulting from bubbles may be generated in a partial region of the porous resin, and the film thickness of the porous resin may be insufficient because the voids in the porous substrate are not sufficiently filled with the liquid composition Y. Thus, it is preferable that the amount of the liquid composition Y that is previously applied to the porous substrate is sufficient for filling the voids in the porous substrate.

«Liquid Composition X»

The liquid composition X refers to a liquid used in combination with the liquid composition Y. The liquid composition X is preferably applied to a region to which the liquid composition Y has been applied. The liquid composition X refers to a liquid capable of forming a porous resin even when used alone (in other words, even when not used in combination with the liquid composition Y). The liquid composition set can contain the liquid composition X to form the porous resin. Note that, in the following descriptions, a resin formed by using the liquid composition X alone is referred to as a resin X, and a porous body of the resin X is referred to as a porous resin X. The meaning of "the liquid composition X forms the porous resin X" includes a case in which some components (e.g. polymerizable compound X) constituting the liquid composition X is cured (polymerized) to form the porous resin X but the remaining components (e.g. solvent X) constituting the liquid composition X are not cured to form no porous resin X, and the like.

The liquid composition X contains a polymerizable compound X and a solvent X, and optionally other components such as a polymerization initiator and a surfactant.

<Polymerizable Compound X>

The polymerizable compound X forms the resin X by polymerization. When polymerized in the liquid composition X, the polymerizable compound X forms the porous resin X. The polymerizable compound X initiates a polymerization reaction and cures owing to active species produced by application of an active energy ray (e.g. light irradiation, heating, etc.) or the like. Depending on the active species, radical polymerization, cationic polymerization, anionic polymerization or the like can be used, and above all, the radical polymerization with high reactivity is preferably used. The polymerizable compound X can be exemplified by a polyfunctional monomer and a monofunctional monomer, but may be a polymerizable oligomer or a polymerizable polymer (macromonomer).

The active energy ray is not particularly limited as long as the active energy ray can impart energy necessary for proceeding the polymerization reaction of the polymerizable compound X in the liquid composition X. Examples of the active energy ray may include ultraviolet rays, electron beams, $\alpha$-rays, $\beta$-rays, $\gamma$-rays, X-rays, and the like. Above all, ultraviolet rays are preferable. Particularly when a high-energy light source is used, the polymerization reaction can proceed without using any polymerization initiator.

The polyfunctional monomer includes a bifunctional monomer, a trifunctional monomer, or a monomer with a higher number of functional groups. Preferably, the liquid composition X has 50.0% by mass or more of polyfunctional monomers based on the mass of the polymerizable compound X.

The polyfunctional monomer is not particularly limited, and can be appropriately selected depending on the intended purpose. Examples of the polyfunctional monomer may include neopentyl glycol di(meth)acrylate, (poly)ethylene glycol di(meth)acrylate, diethylene glycol di(meth)acrylate, triethylene glycol di(meth)acrylate, tetraethylene glycol di(meth)acrylate, (poly)propylene glycol di(meth)acrylate, dipropylene glycol di(meth)acrylate, (poly)tetramethylene glycol di(meth)acrylate, propylene oxide (PO)-added di(meth)acrylate of bisphenol A, ethoxylated neopentyl glycol di(meth)acrylate, propoxylated neopentyl glycol di(meth)acrylate, ethylene oxide (EO)-added di(meth)acrylate of bisphenol A, EO-modified pentaerythritol tri(meth)acrylate, PO-modified pentaerythritol tri(meth)acrylate, EO-modified pentaerythritol tetra(meth)acrylate, PO-modified pentaerythritol tetra(meth)acrylate, EO-modified dipentaerythritol tetra(meth)acrylate, PO-modified dipentaerythritol tetra(meth)acrylate, EO-modified trimethylolpropane tri(meth)acrylate, PO-modified trimethylolpropane tri(meth)acrylate, EO-modified tetramethylolmethane tetra(meth)acrylate, PO-modified tetramethylolmethane tetra(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, trimethylolethane tri(meth)acrylate, trimethylolpropane tri(meth)acrylate, bis(4-(meth)acryloxypolyethoxyphenyl)propane, diallyl phthalate, triallyl trimellitate, 1,6-hexanediol di(meth)acrylate, 1,9-nonanediol di(meth)acrylate, 1,3-butylene glycol di(meth)acrylate, 1,10-decanediol di(meth)acrylate, neopentyl glycol di(meth)acrylate hydroxypivalate, tetramethylolmethane tri(meth)acrylate, dimethylol tricyclodecane di(meth)acrylate, modified glycerol tri(meth)acrylate, bisphenol A diglycidyl ether (meth)acrylic acid adduct, modified bisphenol A di(meth)acrylate, caprolactone-modified dipentaerythritol hexa(meth)acrylate, dipentaerythritol hexa(meth)acrylate, pentaerythritol tri(meth)acrylate tolylenediisocyanate urethane prepolymer, pentaerythritol tri(meth)acrylate hexamethylene diisocyanate urethane prepolymer, ditrimethylolpropane tetra(meth)acrylate, pentaerythritol tri(meth)acrylate hexamethylene diisocyanate urethane prepolymer, urethane acrylate oligomer, epoxy acrylate oligomer, polyester acrylate oligomer, polyether acrylate oligomer, silicone acrylate oligomer, and the like. One type of these polyfunctional monomers may be used alone, or two or more types of the polyfunctional monomers may be used in combination.

The monofunctional monomer refers to a monomer with one functional group.

The monofunctional monomer is not particularly limited, and can be appropriately selected depending on the intended purpose. Examples of the monofunctional monomer may include hydroxyethyl (meth)acrylamide, (meth)acryloyl morpholine, dimethylaminopropyl acrylamide, isobornyl (meth)acrylate, adamantyl (meth)acrylate, 2-methyl-2-adamantyl (meth)acrylate, dicyclopentenyl (meth)acrylate, dicyclopentanyl (meth)acrylate, dicyclopentenyl oxyethyl (meth)acrylate, 3,3,5-trimethylcyclohexane (meth)acrylate, t-butylmethacrylate, tetrahydrofurfuryl (meth)acrylate, cyclohexyl (meth)acrylate, benzyl (meth)acrylate, 2-hydroxyethyl (meth)acrylate, 2-hydroxypropyl (meth)acrylate, 2-hydroxybutyl acrylate, isobutyl acrylate, t-butyl acrylate, phenoxyethyl acrylate, (2-methyl-2-ethyl-1,3-dioxolane-4-yl) methyl acrylate, cyclic trimethylolpropane formal acrylate, and the like. These monofunctional monomers can be added e.g. for the purpose of reinforcing the crosslinking of the multifunctional monomer or of imparting flexibility.

The content of the polymerizable compound X in the liquid composition X is preferably 10.0% by mass or more and 60.0% by mass or less, more preferably 20.0% by mass or more and 50.0% by mass or less, based on the total amount of the liquid composition X. A case in which the content of the polymerizable compound X is 60.0% by mass or less is preferable because the resultant porous resin X has several nanometers or less of pore size which is not too small, and the porous resin X has an appropriate porosity which can suppress a tendency of hindering liquid and gas permeation. A case in which the content of the polymerizable compound X is 10.0% by mass or more is preferable because a three-dimensional network structure is sufficiently formed in the resin X to sufficiently form the porous structure, and there is a tendency that the strength of the resultant porous structure is also improved.

The content of the polyfunctional monomer in the liquid composition X is preferably 50.0% by mass or more based on the total amount of the polymerizable compound X. The multifunctional monomer content of 50.0% by mass or more is preferable because the polymer X generated in the process of polymerization of the polymerizable compound X in the liquid composition X becomes incompatible with (easily phase-separated from) a solvent X described later, and the porous resin X can be easily formed.

<Solvent X (Porogen)>

The solvent X (hereinafter, also referred to as "porogen") is a liquid compatible with the polymerizable compound X. Also, the solvent X is a liquid that is incompatible with (i.e., phase-separated from) the polymer X generated in the process of polymerizing the polymerizable compound X in the liquid composition X. That is, in the present disclosure, the term "solvent X" is distinguished from the commonly-used term "solvent" in meaning. Because the liquid composition X contains the solvent X, the polymerizable compound X forms the porous resin X when polymerizing in the liquid composition X. It is preferable that the solvent X is capable of dissolving a compound (i.e., polymerization initiator to be described later) that generates radicals or acids by light or heat. One type of solvent X may be used alone, or two or more types of solvents X may be used in combination. In the present disclosure, the solvent X is not polymerizable.

One type of porogen alone or a combination of two or more types of porogens has a boiling point of preferably 50°C or higher and 250°C or lower, more preferably 70°C or higher and 200°C or lower, even more preferably 120°C or higher and 200°C or lower, at normal pressure. When the boiling point is 50°C or higher, vaporization of the porogen is suppressed at around room temperature and the liquid composition X is easy to handle, so that the content of the porogen in the liquid composition X can be easily controlled. When the boiling point is 250°C or lower, the time required for drying the porogen after polymerization is shortened, and the productivity of the porous resin X is improved. In addition, the amount of the porogen remaining inside the porous resin X can be reduced, so that the quality of the porous resin X as a functional layer such as a separation layer for separating substances or a reaction layer as a reaction field, is improved.

The porogen is appropriately selected from the viewpoint of the relation of the surface tension between the liquid composition X and the liquid composition Y, the relation of compatibility between the porogen and the polymerizable compound X, viscosity, boiling point and the like. Examples of the porogen may include ethylene glycols such as diethylene glycol monomethyl ether, ethylene glycol monobutyl ether, ethylene glycol monoisopropyl ether and dipropylene glycol monomethyl ether; γ-butyrolactone; esters such as propylene carbonate; amides such as N,N-dimethylacetamide; and the like. Also, examples of the porogen may include liquids having a relatively large molecular weight, such as methyl tetradecanoate, methyl decanoate, methyl myristate and tetradecane. Also, examples of the porogen may include liquids such as acetone, 2-ethylhexanol and 1-bromonaphthalene.

In the present disclosure, the above-described liquids as examples do not always serve as a porogen. In the present disclosure, as described above, the porogen is a liquid that is compatible with the polymerizable compound X and incompatible with (i.e., phase-separated from) the resultant polymer X in the process of polymerizing the polymerizable compound X in the liquid composition X. In other words, whether or not a liquid serves as a porogen depends on the relation between the polymerizable compound X and the resultant polymer X.

The liquid composition X of the present disclosure only needs to contain at least one type of porogen having the above-described specific relation with the polymerizable compound X. Therefore, the range of selection of materials for preparing the liquid composition X is widened, and the liquid composition X is easy to design. As the range of selection of materials for preparing the liquid composition X is widened, the liquid composition X can provide a wide range of application in response to requirements for any characteristics other than the capability of forming a porous structure. For example, when the liquid composition X is to be discharged by an inkjet method, the liquid composition X is required to have discharge stability and the like as a required characteristic other than the capability of forming a porous structure. In this case, since the range of selection of materials is wide, the liquid composition X is easy to design.

In the present disclosure, since the liquid composition X only needs to contain at least one type of porogen having the above-described specific relation with the polymerizable compound X as described above, the liquid composition X may further additionally contain a liquid (i.e., non-porogen liquid) that does not have the above-described specific relation with the polymerizable compound X. The content of the liquid (i.e., non-porogen liquid) that does not have the above-described specific relation with the polymerizable compound X is preferably 10.0% by mass or less, more preferably 5.0% by mass or less, and even more preferably 1.0% by mass or less, based on the total amount of the liquid composition X. It is particularly preferable that such a liquid is not contained in the liquid composition X (e.g. the amount is below the detection limit when using a known and technically common knowledge technique).

The content of the porogen in the liquid composition X is preferably 40.0% by mass or more and 80.0% by mass or less, more preferably 50.0% by mass or more and 70.0% by mass or less, based on the total amount of the liquid composition X. A case in which the content of the porogen is 40.0% by mass or more is preferable because the resultant porous body has several nanometers or less of pore size which is not too small, and the porous body has an appropriate porosity which can suppress a tendency of hindering liquid and gas permeation. A case in which the content of the porogen is 80.0% by mass or less is preferable because a three-dimensional network structure is sufficiently formed in the resin X to sufficiently form the porous structure, and there is a tendency that the strength of the resultant porous structure is also improved.

<Polymerization Initiator>

A polymerization initiator is a material capable of generating active species such as radicals and cations by energy such as light and heat to initiate polymerization of the polymerizable compound X. As the polymerization initiator, known radical polymerization initiators, cationic polymerization initiators, base generators or the like can be used singly or in combination of two or more. Above all, it is preferable to use radical polymerization initiators.

The radical polymerization initiator is not particularly limited, and can be appropriately selected depending on the intended purpose. Examples of the radical polymerization initiator may include aromatic ketones, acylphosphine oxide compounds, aromatic onium salt compounds, organic peroxides, thio compounds (e.g. thioxanthone compounds and thiophenyl-group-containing compounds), hexaaryl biimidazole compounds, ketoxime ester compounds, borate compounds, azinium compounds, metallocene compounds, active ester compounds, carbon-halogen-bond-containing compounds, alkylamine compounds, and the like. Specific examples of the radical polymerization initiator may include α-hydroxyacetophenone, α-aminoacetophenone, 4-aroyl-1,3-dioxolane, benzyl ketal, 2,2-diethoxyacetophenone, p-dimethylaminoacetophene, p-dimethylaminopropiophenone, benzophenone, 2-chlorobenzophenone, pp'-dichlorobenzophene, pp'-bis-diethylaminobenzophenone, Michler's ketone, benzyl, benzoin, benzyl dimethyl ketal, tetramethylthiuram monosulphide, thioxanthone, 2-chlorothioxanthone, 2-methylthioxanthone, azobisisobutyronitrile, benzoin peroxide, di-tert-butyl peroxide, 1-hydroxycyclohexylphenyl ketone, 2-hydroxy-2-methyl-1-phenyl-1-one, 1-(4-isopropylphenyl)-2-hydroxy-2-methylpropan-1-one, methylbenzoylformate, benzoin isopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1-(4-morpholinophenyl)-butanone-1,1-hydroxy-cyclohexyl-phenyl-ketone, 2,2-dimethoxy-1,2-diphenylethane-1-one, bis(η5-2,4-cyclopentadiene-1-yl)-bis(2,6-difluoro-3-(1H-pyrrol-1-yl)-phenyl) titanium, bis(2,4,6-trimethylbenzoyl)-phenylphosphine oxide, 2-methyl-1[4-(methylthio)phenyl]-2-morfolinopropan-1-one, 2-hydroxy-2-methyl-1-phenyl-propane-1-one, bis(2,6-dimethoxybenzoyl)-2,4,4-trimethyl-pentylphosphine oxide, 1-[4-(2-hydroxyethoxy)-phenyl]-2-hydroxy-2-methyl-1-propane-1-one monoacylphosphine oxide and the like.

The content of the polymerization initiator is preferably 0.1% by mass or more and 10.0% by mass or less based on the total mass of the polymerizable compound X. The content of 0.1% by mass or more makes it possible to increase the curing rate to reduce residual unreactants resulting from insufficient curing. In addition, when the content is 10.0% by mass or less, the porous structure becomes an excessively fine structure due to the faster curing rate, so that decrease in conductivity of the porous structure can be reduced.

<Surfactant>

The surfactant is used to adjust the surface tension and the dynamic surface tension of the liquid composition X. Specifically, it is preferable to select a surfactant that does not lower the surface tension of the liquid composition X too much with respect to the surface tension of the liquid composition Y, and that has a high capability of lowering the dynamic surface tension of the liquid composition X. When the surfactant is used to adjust the surface tension of the liquid composition X for the purpose of improving the surface uniformity of the porous resin, the surfactant is also referred to as a leveling agent. When the porous resin formed by the liquid composition X is used as a separator for the power storage element, it is preferable to use a material of the surfactant, which has little effect on the battery properties. Specifically, for example, a material having a polymerizable functional group is preferable. The surfactant is preferably contained in the liquid composition X, but may not be contained in the liquid composition X.

The surfactant is not particularly limited, and, for example, silicon-based surfactants, acetylene glycol-based surfactants, and fluorine-based surfactants or the like can be used.

Specific examples of the silicon-based surfactants may include: BYK-300, BYK-306, BYK-310, BYK-320, BYK-330, BYK-344, BYK-346, BYK-UV3500 and BYK-UV3570 (manufactured by BYK Japan KK); TEGO Rad2100, TEGO Rad2200, TEGO Rad2250, TEGO Rad2300, TEGO Rad2500, Tego Twin4000 and Tego Twin4100 (manufactured by Evonik Industries AG); KP-341, KP-358, KP-368, KF-96-50CS, KF-6020 and KF-50-100CS (manufactured by Shin-Etsu Chemical Co., Ltd.); and the like.

Specific examples of the acetylene glycol-based surfactants may include DYNOL 604, SURFYNOL 104H, SURFYNOL 104A, SURFYNOL 104BC, SURFYNOL 104DPM, SURFYNOL 104PA, SURFYNOL 104S, SURFYNOL 420, SURFYNOL 440, SURFYNOL SE, SURFYNOL SE-F, SURFYNOL 61 (manufactured by Air Products Japan K.K.) and the like.

Specific examples of the fluorine-based surfactants may include: MEGAFACE F-430, MEGAFACE F-444, MEGAFACE F-472SF, MEGAFACE F-475, MEGAFACE F-477, MEGAFACE F-552, MEGAFACE F-553, MEGAFACE F-554, MEGAFACE F-555, MEGAFACE F-556, MEGAFACE F-558, MEGAFACE R-94, MEGAFACE RS-75, MEGAFACE RS-76-NS and MEGAFACE RS-72-K (manufactured by DIC Corporation); EFTOP EF-351, EFTOP EF-352, EFTOP EF-601, EFTOP EF-801 and EFTOP EF-802 (manufactured by Mitsubishi Materials Corporation); FTERGENT 222F, FTERGENT 251 and FTX-218 (manufactured by NEOS COMPANY LIMITED); SURFLON SC-101 and SURFLON KH-40 (manufactured by AGC Seimi Chemical Co., Ltd.); and the like.

The content of the surfactant is preferably 0.01% by mass or more and 5.0% by mass or less, more preferably 0.05% by mass or more and 3.0% by mass or less, and even more preferably 0.1% by mass or more and 1.0% by mass or less, based on the mass of the liquid composition X. Originally, the case in which a small amount of the surfactant is sufficient means a case in which a surfactant with a high capability of lowering the surface tension is used, except for the case in which difference in the surface tension between the liquid composition X and the liquid composition Y is small and addition of the surfactant is not needed. Such a case is not preferable because equation (2) is not often satisfied, and decrease in the film thickness of the porous resin (permeation of the liquid composition X into the liquid composition Y) is more likely to occur. On the other hand, a large amount of the surfactant is not preferable because the effect of the surfactant as impurities remaining in the final porous resin (e.g. adverse effects on battery properties when used in the separator application) is increased.

<Other Components>

The liquid composition X may contain other components as required. Other components are not particularly limited and can be selected depending on the intended purpose. Examples of the other components may include polymerization inhibitors, defoamants, polymerization promoters (sensitizers), fluorescent whitening agents, viscosity stabilizers, antifungal agents, antiseptics, antioxidants, ultraviolet absorbers, chelating agents, pH conditioners, thickeners and the like.

<Conditions for Making Resin X Porous>

The porous resin X that is a porous body of the resin X is formed by polymerization-induced phase separation occurring in the liquid composition X. The polymerization-induced phase separation refers to a state in which the porogen is compatible with the polymerizable compound X but is incompatible with (i.e., phase-separated from) the polymer X produced in the process of polymerizing the polymerizable compound X. Among existing methods for obtaining a porous body by phase separation, the polymerization-induced phase separation method can be used to form a porous body having a network structure, which is expected to have high resistance to chemicals and heat. Also, as compared with other methods, the polymerization-induced phase separation has advantages of shorter process time and easier surface modification.

Next, a process for forming the porous resin X by polymerization-induced phase separation will be described. The polymerizable compound X undergoes a polymerization reaction upon light irradiation or the like to form the resin X. During this process, the solubility of the growing resin X in the porogen decreases to cause phase separation between the resin X and the porogen. Finally, the resin X forms a network porous structure in which the pores are filled with the porogen and the like. This porous structure is dried to remove the porogen and the like, so that the porous resin X remains. Thus, to form the porous resin X, a condition for the compatibility between the polymerizable compound X and the porogen and another condition for the compatibility between the resin X and the porogen are considered.

- Condition for Compatibility between Polymerizable Compound X and Porogen -

A condition for compatibility between the polymerizable compound X and the porogen may be, for example, a condition in which a light transmittance of the liquid composition X at a wavelength of 550 nm, measured while stirring the liquid composition X, is 30% or higher. A measurement method for determining whether or not this condition is satisfied is as follows.

First, the liquid composition X is injected into a quartz cell, and the light (visible light) transmittance of the liquid composition X at a wavelength of 550 nm is measured while stirring the liquid composition X using a stirrer at 300 rpm. When the light transmittance is 30% or higher, it is determined that the polymerizable compound X and the porogen are in a compatible state, and when the light transmittance is lower than 30%, it is determined that the polymerizable compound X and the porogen are in an incompatible state.

Various conditions for measuring the light transmittance are as described below.

- Quartz cell: Special microcell with screw cap (trade name: M25-UV-2)
- Transmittance measuring instrument: USB 4000, manufactured by Ocean Optics, Inc.
- Stirring speed: 300 rpm
- Measurement wavelength: 550 nm
- Reference: Light transmittance at a wavelength of 550 nm measured and acquired with the quartz cell filled with air (i.e., transmittance: 100%)
- Condition for Compatibility between Resin X and Porogen -

A condition for incompatibility (i.e., phase separation) between the resin X and the porogen may be, for example, a condition in which a haze measuring element prepared from the liquid composition X has a haze increasing rate of 1.0% or higher. A measurement method for determining whether or not this condition is satisfied is as follows.

First, fine resin particles are uniformly dispersed on a non-alkali glass substrate by spin coating to form a gap agent. Subsequently, the substrate to which the gap agent has been applied and another non-alkali glass substrate to which no gap agent has been applied are brought to bond to each other in a manner that the two substrates come to sandwich the surface coated with the gap agent. After that, the liquid composition X is made to fill the space between the bonded substrates by utilizing capillary phenomenon, thus preparing a "pre-ultraviolet (UV) irradiation haze measuring element". Subsequently, the pre-UV irradiation haze measuring element is irradiated with UV to cure the liquid composition X. Finally, the peripheries of the substrates are sealed with a sealing agent, thus preparing a "haze measuring element". Various preparation conditions are described below.

- Non-alkali glass substrate: OA-10G, manufactured by Nippon Electric Glass Co., Ltd., 40 mm, t=0.7 mm
- Gap agent: Fine resin particles MICROPEARL GS-L100, manufactured by Sekisui Chemical Company, Limited, average particle diameter=100 $\mu$m
- Spin coating conditions: dispersion droplet volume=150 $\mu$L, rotation speed=1000 rpm, and rotation time=30 s.
- Amount of liquid composition X filled: 160 $\mu$L
- UV irradiation conditions: light source=UV-LED, light source wavelength=365 nm, irradiation intensity=30 mW/cm$^2$, and irradiation time=20 s.
- Sealing agent: TB3035B (manufactured by ThreeBond Group)

Next, the haze values (cloudiness) are measured using the above-prepared pre-UV irradiation haze measuring element and haze measuring element. The measured haze value of the pre-UV irradiation haze measuring element is set as a reference (i.e., the haze value is 0). The increasing rate of the measured value (haze value) of the haze measuring element with respect to the measured value of the pre-UV irradiation haze measuring element is calculated. The haze value of the haze measuring element increases as the compatibility between the resin X formed by polymerization of the polymerizable compound X and the porogen decreases, and the haze value decreases as the compatibility increases. A higher haze value indicates that the resin X formed by polymerization of the polymerizable compound X is more likely to form a porous structure. When the haze increasing rate is 1.0% or higher, it is determined that the resin X and the porogen are in an incompatible state, and when the haze increasing rate is lower than 1.0%, it is determined that the resin X and the porogen are in a compatible state. An instrument used for the measurement is as follows.

- Haze measuring instrument: Haze meter NDH5000, manufactured by NIPPON DENSHOKU INDUSTRIES CO., LTD.

<Method for Producing Liquid Composition X>

Preferably, the liquid composition X is prepared through a step of dissolving a polymerization initiator in the polymerizable compound X, a step of further dissolving a porogen and other components in the polymerizable compound X, and a step of stirring the solution to obtain a uniform solution, and the like.

<Physical Properties of Liquid Composition X>

- Dynamic Surface Tension -

It is preferable that the liquid composition X satisfies the following equation (2) regarding a dynamic surface tension $X_{15}$ of the liquid composition X at a bubble lifetime of 15 milliseconds and at 24°C according to a maximum bubble pressure method, a dynamic surface tension $X_{150}$ of the liquid composition X at a bubble lifetime of 150 milliseconds and at 24°C according to the maximum bubble pressure method, and a dynamic surface tension $X_{1500}$ of the liquid composition X at a bubble lifetime of 1500 milliseconds and at 24°C according to the maximum bubble pressure method. It is more preferable that the liquid composition X satisfies the following equation (2a). In the method in which the following equation (2) is satisfied, a type and an amount of the surfactant to be added to the liquid composition X are appropriately selected.

$$(\text{Dynamic surface tension } X_{15} - \text{Dynamic surface tension } X_{150}) - (\text{Dynamic surface tension } X_{150} - \text{Dynamic surface tension } X_{1500}) \geq 2.3 \text{ mN/m} \dots \text{Equation (2)}$$

$$(\text{Dynamic surface tension } X_{15} - \text{Dynamic surface tension } X_{150}) - (\text{Dynamic surface tension } X_{150} - \text{Dynamic surface tension } X_{1500}) \geq 2.5 \text{ mN/m} \dots \text{Equation (2a)}$$

The reason why it is preferable for the liquid composition X to satisfy equation (2) will be explained.

As described above, the liquid composition Y is previously applied to the porous substrate, the voids in the porous substrate are filled with a sufficient amount of the liquid composition Y, and then the liquid composition X for forming the porous resin is applied to the porous substrate to form the porous resin on the porous substrate. In this case, it is necessary to satisfy equation (1) for obtaining the surface uniformity (suppressing defects on the coating film), and it is preferable that the dynamic surface tension of the liquid composition X is lower than the surface tension of the liquid composition Y according to the plate method, and the liquid composition X alone has a low dynamic surface tension. On the other hand, when application of the liquid composition X is conducted e.g. by an inkjet method, unintended streak (groove)-like structure portions may be formed on the surface of the porous resin. As described above, this problem tends to be resolved by satisfying equation (3), and it is preferable that the surface tension of the liquid composition X according to the plate method is not lower too much with respect to the surface tension of the liquid composition Y according to the plate method, and the liquid composition X alone has a high surface tension according to the plate method. That means, it is preferable that an inclination of the decrease in the dynamic surface tension with respect to time is large in the early stage and small in the latter stage, and this relation is presented in equation (2).

When equation (2) is satisfied, it is possible not only to improve the surface uniformity and to suppress formation of the streak (groove)-like structural portions but also to suppress decrease in the film thickness of the porous resin (permeation of the liquid composition X into the liquid composition Y). For example, if a small amount of a strong (the surface tension of the liquid composition X according to the plate method is excessively low with respect to the liquid composition Y) surfactant that does not originally satisfy equation (3) is added in an attempt to bring the surface tension difference within the range of equation (1) or equation (3), equation (2) cannot be satisfied and decrease in the film thickness of the porous resin (permeation of the liquid composition X into the liquid composition Y) may be caused, but can be suppressed. This makes it possible to suppress, for example, unintended decrease in the film thickness (decrease in separator performance) and increase in battery resistance due to the porous substrate (active material layer) being covered by the porous resin (separator) when the porous resin formed by the liquid composition set is used as the separator of the power storage element, and furthermore to thin the film of the porous resin (separator), so that low resistance and low cost can be achieved.

- Viscosity -

The viscosity of the liquid composition X is not particularly limited and can be appropriately adjusted depending on the application and application means. For example, when the liquid composition X is discharged from an inkjet discharge device, the viscosity at 25°C is preferably 7 mPa·s or higher and 40 mPa·s or lower, more preferably 9 mPa·s or higher and 20 mPa·s or lower. In addition, any viscosity in a range of 20°C to 65°C is preferably 5 mPa·s or higher and 15 mPa·s or lower, more preferably 6 mPa·s or higher and 12 mPa·s or lower. When the above viscosity range is satisfied in the above temperature range, the temperature of the inkjet discharge device is adjusted as necessary to discharge the liquid composition X.

The viscosity can be measured with a cone plate rotary viscometer VISCOMETER TVE-25L manufactured by Toki Sangyo Co., Ltd. by using a cone rotor (1°34'×R24) and setting the rotation speed to 50 rpm and the temperature of constant-temperature circulating water to within a range of 20°C to 65°C. The temperature of circulating water can be adjusted using VISCOMATE VM-150IV.

<<Liquid Composition Y>>

The liquid composition Y is a liquid used in combination with the liquid composition X that forms a porous resin. The liquid composition Y is preferably used e.g. for suppressing diffusion of the liquid composition X and forming a porous resin at a desired position. Specifically, for example, in the case of forming a porous resin on a porous substrate, it is preferable that the liquid composition Y is used so as to be applied to the porous substrate before applying the liquid composition X to the substrate to suppress permeation of the liquid composition X into the porous substrate. When the liquid composition X is suppressed from permeating the porous substrate, the porous resin is partially formed in the porous substrate, so that deterioration of the function of the porous substrate can be suppressed. More specifically, for example, in the case of using the liquid composition set for forming a separator of a power storage element, the porous resin forming the separator is partially formed in an active material having a porous structure, so that deterioration of the function of the active material can be suppressed, and as a result, deterioration of the function of the power storage element can be suppressed.

The liquid composition Y contains a solvent Y and optionally other components. Preferably, the liquid composition Y forms no porous resin when used alone (in other words, when not used in combination with the liquid composition X). That is, preferably, the liquid composition Y is substantially free of polymerizable compound. Here, "substantially free of polymerizable compound" means that any polymerizable compound cannot be detected by a method known and common in the art for confirming the presence or absence of polymerizable compound in the liquid composition Y.

The liquid composition Y is preferably a liquid that can be removed by drying, preferably does not contain non-volatile components, and preferably consists entirely of volatile components.

<Solvent Y>

As the solvent Y, a solvent in which the liquid composition Y can satisfy equation (1) in relation with the liquid composition X is selected, as described above. One type of solvent Y may be used alone, or two or more types of solvents Y may be used in combination.

One type of the solvent Y alone or a combination of two or more types of the solvents Y has a boiling point of preferably 50°C or higher and 250°C or lower, and more preferably 70°C or higher and 200°C or lower, at normal pressures. When the boiling point is 50°C or higher, vaporization of the solvent Y is suppressed at around room temperature and the liquid composition Y is easy to handle, so that the content of the solvent Y in the liquid composition Y can be easily controlled. When the boiling point is 250°C or lower, the time required for drying the solvent Y after formation of the porous resin is shortened, and the productivity is improved. In addition, the amount of the solvent Y remaining inside the porous resin can be reduced, so that the quality of the porous resin as a functional layer, such as a separation layer for separating substances or a reaction layer as a reaction field, is improved.

The solvent Y is selected as appropriate in terms of the relation with the liquid composition X, the relation with the polymerizable compound X contained in the liquid composition X, the wettability on the porous substrate, the viscosity, the boiling point and the like. Examples of the solvent Y may include ethylene glycols such as ethylene glycol monobutyl ether, ketones such as cyclohexanone, esters such as diethyl carbonate, and amides such as N,N-dimethylacetamide, and alcohols such as ethanol, 1,3-butanediol, 2-propanol and 2-ethylhexanol. Preferably, the solvent Y is the same as the solvent X. This is because the solvent Y and solvent X are the same, which allows the solvent Y to functionally serve as a porogen for the polymerizable compound X in the mixing region of the liquid composition X and the liquid composition Y, so that formation of the porous resin in the liquid composition X is not inhibited. Also, this is because unintended mixing behavior (e.g. convection) can be suppressed when the liquid composition X lands on the liquid composition Y.

The content of the solvent Y in the liquid composition Y is preferably 60.0% by mass or more, more preferably 70.0% by mass or more, even more preferably 80.0% by mass or more, and particularly preferably 90.0% by mass or more, based on the total amount of the liquid composition Y. The solvent Y may account for the total amount (100% by mass) of the liquid composition Y.

<Other Components>

The liquid composition Y may optionally contain other components. Other components are not particularly limited and can be appropriately selected depending on the intended purpose. Examples of other components may include defoamants, viscosity stabilizers, antifungal agents, antiseptics, antioxidants, ultraviolet absorbers, chelating agents, pH conditioners, thickeners and the like.

<Physical Properties of Liquid Composition Y>

- Dynamic Surface Tension -

Preferably, the surface tension Y of the liquid composition Y at 24°C according to the plate method is 30 mN/m or lower for improving wettability on the porous substrate to which the liquid composition Y is applied.

- Viscosity -

Preferably, the liquid composition Y has a low viscosity so that the liquid composition Y can quickly permeate the porous substrate to which the liquid composition Y is applied (in other words, so that the liquid composition Y can be quickly substituted with air in the voids of the porous substrate). Specifically, the viscosity at 25°C is preferably 30 mPa·s or lower, more preferably·15 mPa·s or lower.

The viscosity can be measured with a cone plate rotary viscometer VISCOMETER TVE-25L manufactured by Toki Sangyo Co., Ltd. by using a cone rotor (1°34'×R24) and setting the rotation speed to 50 rpm and the temperature of constant-temperature circulating water to 25°C. The temperature of circulating water can be adjusted using VISCOMATE VM-150IV.

[Porous Resin Producing Apparatus and Method for Producing Porous Resin]

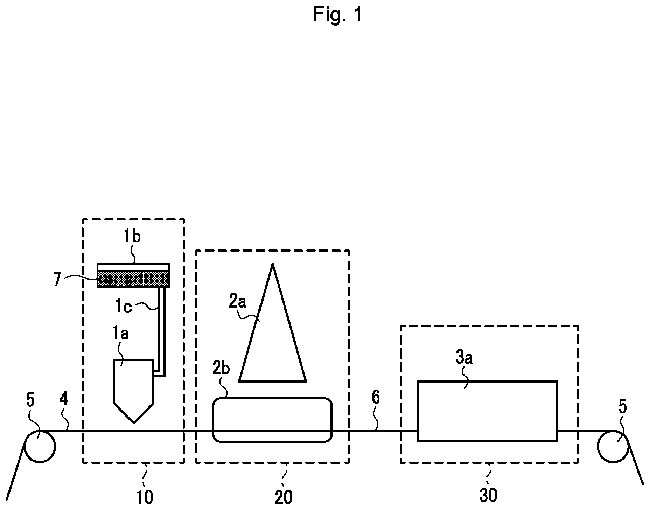

FIG. 1 is a schematic diagram illustrating an example of a porous resin producing apparatus that performs a method for producing porous resin of the present disclosure.

«Porous Resin Producing Apparatus»

A porous resin producing apparatus 100 produces a porous resin using the liquid composition X and the liquid composition Y described above. The porous resin producing apparatus 100 includes a printing process unit 10, a polymerization process unit 20, and a heating process unit 30. The printing process unit 10 performs a process of applying the liquid composition X and the liquid composition Y to a printing substrate 4 to form respective layers of the liquid composition X and the liquid composition Y. The polymerization process unit 20 performs a polymerization process of activating a polymerization initiator in the liquid composition X layer to cause polymerization of a polymerizable compound to obtain a porous resin precursor 6. The heating process unit 30 performs a heating process of heating the porous resin precursor 6 to obtain a porous resin.

The porous resin producing apparatus 100 includes a conveyance unit 5 that conveys the printing substrate 4. The conveyance unit 5 conveys the printing substrate 4 through the printing process unit 10, the polymerization process unit 20, and the heating process unit 30, in that order, at a preset speed.

<Printing Process Unit>

The printing process unit 10 includes a printing device 1a, an accommodating container 1b, and a supply tube 1c. The printing device 1a serves as an application device that performs an application process of applying the liquid composition X and the liquid composition Y to the printing substrate 4. The accommodating container 1b separately accommodates the liquid composition X and the liquid composition Y (the accommodating container configured to accommodate the liquid composition X is referred to as an accommodating container X, and the accommodating container configured to accommodate the liquid composition Y is referred to as an accommodating container Y). The supply tube 1c supplies the liquid composition X and the liquid composition Y accommodated in the accommodating container 1b to the printing device 1a. The application device includes an application device X that applies the liquid composition X and an application device Y that applies the liquid composition Y. The application process includes an application process X of applying the liquid composition X and an application process Y of applying the liquid composition Y.

The accommodating container 1b separately accommodates the liquid composition X and the liquid composition Y (in FIG. 1, the liquid composition X and the liquid composition Y are simply denoted as a liquid composition 7). In the printing process unit 10, the printing device 1a separately discharges the liquid composition X and the liquid composition Y to separately apply the liquid composition X and the liquid composition Y onto the printing substrate 4 to form respective thin-film layers of the liquid composition X and the liquid composition Y. In the present disclosure, the application process Y is performed first, and the application process X is performed thereafter. Preferably, after the application process Y is performed in advance, the application process X is performed such that the liquid composition X is applied so as to at least partially overlap with the region to which the liquid composition Y has been applied.

The accommodating container 1b may be either integrated with the porous resin producing apparatus 100 or detachable from the porous resin producing apparatus 100. Further, the accommodating container 1b may be used for supplying the liquid compositions to an accommodating container integrated with the porous resin producing apparatus 100 or an accommodating container detachable from the porous resin producing apparatus 100.

The printing device 1a is not particularly limited as long as the printing device 1a is capable of applying the liquid composition X and the liquid composition Y. For example, it is possible to use any printing device corresponding to various printing methods such as knife coating, die coating, lip coating, comma coating, rotary screen coating, reverse roll coating, kneader coating, blade coating, curtain coating, spin coating, casting, micro gravure coating, gravure coating, bar coating, roll coating, wire bar coating, dip coating, slit coating, capillary coating, spray coating, nozzle coating, gravure printing, screen printing, flexographic printing, offset printing, reverse printing, and inkjet printing. Above all, the inkjet method, which is non-contact type and has a long gap between the inkjet head and the printing substrate, is preferable. The printing device 1a may have a temperature adjustment mechanism that adjusts the temperature of the printing device 1a to achieve an appropriate viscosity for applying the liquid composition X and liquid composition Y.

The accommodating container 1b and the supply tube 1c can be arbitrarily selected as long as they can reliably and separately accommodate and supply the liquid composition X and the liquid composition Y. The accommodating container 1b and the supply tube 1c are preferably made of a material having light-shielding property in relatively short wavelength regions such as ultraviolet regions and visible light regions. Thereby, the liquid composition X is prevented from starting a polymerization by external light.

<Polymerization Process Unit>

As illustrated in FIG. 1, the polymerization process unit 20 includes a light emitting device 2a and a polymerization-inactive gas circulating device 2b. The light emitting device 2a is a curing device that performs a curing process of curing the liquid composition by emitting active energy rays such as heat and light to the liquid composition. The polymerization-inactive gas circulating device 2b circulates a polymerization-inactive gas. The light emitting device 2a emits light to the liquid composition X layer and the liquid composition Y layer formed by the printing process unit 10 in the presence of a polymerization-inactive gas, to initiate a photopolymerization in the liquid composition X layer, thereby obtaining the porous resin precursor 6.

The light emitting device 2a is not particularly limited as long as the light emitter 2a is appropriately selected depending on the absorption wavelength of the photopolymerization initiator and is capable of initiating and proceeding polymerization of the polymerizable compound contained in the liquid composition X layer. Examples of the light emitter 2a may include ultraviolet light sources such as high-pressure mercury lamp, metal halide lamp, hot cathode tube, cold cathode tube, and light emitting diode (LED). However, since light having a shorter wavelength generally tends to reach a deeper portion, it is preferable that the light source is selected depending on the thickness of the porous film to be formed.

In relation to the irradiation intensity of the light source of the light emitting device 2a, if the irradiation intensity is too strong, the porous structure may become fine and conductivity in the porous structure may decrease, or the pores may close during drying and the porosity may decrease. If the irradiation intensity is too weak, the formed structure may become particulate and the porosity may decrease. Therefore, the irradiation intensity is preferably 10 mW/cm$^2$ or higher and 1 W/cm$^2$ or lower, and more preferably 30 mW/cm$^2$ or higher and 300 mW/cm$^2$ or lower.

In relation to the timing of the light source irradiation of the light emitting device 2a, if the time from the formation of the liquid composition X layer is too long, the liquid composition X permeates the liquid composition Y layer, and curing is more likely to deteriorate. If the time is too short, the adhesiveness of the porous resin precursor 6 to the printing substrate 4 is lowered. Thus, an appropriate irradiation timing should be selected.

The polymerization-inactive gas circulating device 2b plays a role of lowering the concentration of polymerization-active oxygen in the atmosphere to proceed a polymerization reaction of the polymerizable compound X present near the surface of the liquid composition X layer without any inhibition. The polymerization-inactive gas used is not particularly limited as long as the polymerization-inactive gas exerts the above-described functions. Examples of the polymerization-inactive gas may include nitrogen gas, carbon dioxide gas, argon gas and the like.

The flow rate of the polymerization-inactive gas is determined for an efficient inhibition reduction effect. The O$_2$ concentration is preferably lower than 20% (i.e., an environment where the oxygen concentration is lower than that of the atmosphere), more preferably 0% or higher and 15% or lower, and even more preferably 0% or higher and 5% or lower. It is preferable that the polymerization-inactive gas circulating device 2b is equipped with a temperature controlling device capable of controlling the temperature, for providing reliable polymerization proceeding conditions.

<Heating Process Unit>

As illustrated in FIG. 1, the heating process unit 30 includes a heating device 3a as an example of a solvent removing device. The heating process unit 30 performs a solvent removing process in which the heating device 3a heats the solvent X, the solvent Y and the like remaining in the porous resin precursor 6 formed by the polymerization process unit 20 to dry and remove the solvents. As a result, a porous resin can be formed. The heating process unit 30 may perform the solvent removing process under reduced pressures. Insufficient removal of the solvent may affect the properties (e.g. battery properties) of the products including porous resin due to residues.

The heating process unit 30 also performs a polymerization promoting process and an initiator removing process. In the polymerization promoting process, the heating device 3a heats the porous resin precursor 6 to further promote the polymerization reaction performed by the polymerization process unit 20. In the initiator removing process, the heating device 3a heats the photopolymerization initiator remaining in the porous resin precursor 6 to dry and remove the photopolymerization initiator. The polymerization promoting process and the initiator removing process are not necessarily performed at the same time as the solvent removing process and may be performed before or after the solvent removing process.

The heating process unit 30 also performs, after the solvent removing process, a polymerization completing process in which the porous body is heated under reduced pressure. The heating device 3a is not particularly limited as long as the heater 3a exerts the above-described functions. Examples of the heater 3a may include an infrared (IR) heater, a hot air heater and the like.

The heating temperature and time can be appropriately selected depending on the boiling points of the solvent X, the solvent Y and the like contained in the porous resin precursor 6 or the thickness of the formed film.

<Printing Substrate>

The printing substrate 4 may be made of any material regardless of whether the printing substrate 4 is transparent or opaque.

That means, as the transparent substrate, glass substrates, resin film substrates such as various plastic films, and composite substrates of the lass substrates and the resin film substrates, or the like can be used. As the opaque substrates, it is possible to use various substrates, e.g. silicon substrates, metal substrates such as stainless steel, or laminates of the silicon substrates or the metal substrates.

The printing substrate 4 may also be a recording medium made of plain paper, glossy paper, special paper, cloth, or the like. The recording medium may also be a low-permeability substrate (low-absorptivity substrate). The low-permeability substrate refers to a substrate having a surface with a low level of moisture permeability, absorptivity, or adsorptivity. Examples of the low-permeability substrate also include a material having a number of hollow spaces inside but not opened to the exterior. Examples of the low-permeability substrate may include coated papers used in commercial printing, recording media such as surface-coated paperboard having intermediate and back layers in each of which waste paper pulp is blended, and the like.

Preferably, the printing substrate 4 is a porous substrate, as described above. This is because the porous substrate makes the effect of the present invention more remarkable. Specific examples of the porous substrate may include active material layers used in power storage elements, porous sheets used as insulating layers in power storage elements or power generation elements, and the like.

With regard to the shape, the substrate may be in any form such as a substrate having a curved surface or a recessed-projected shape, as long as the substrate is applicable to the printing process unit 10 and the polymerization process unit 20.

[Porous Resin]

The film thickness of the porous resin formed by the liquid composition set is not particularly limited. In view of curing uniformity during polymerization, the film thickness is preferably 0.01 $\mu$m or more and 500 $\mu$m or less, more preferably 0.01 $\mu$m or more and 100 $\mu$m or less, even more preferably 1 $\mu$m or more and 50 $\mu$m or less, and particularly preferably 10 $\mu$m or more and 20 $\mu$m or less. When the film thickness is 0.01 $\mu$m or more, the surface area of the resultant porous resin is large, and the function of the porous resin can be sufficiently exerted. When the film thickness is 500 $\mu$m or less, light or heat used for the polymerization is suppressed from becoming non-uniform in the film thickness direction, and the resultant porous resin is uniform in the film thickness direction. Such a porous resin that is uniform in the film thickness direction has less structural unevenness and can suppress a decrease in liquid or gas permeability. The film thickness of the porous resin is appropriately adjusted depending on the application of the porous resin. For example, when the porous resin is used as an insulating layer of a power storage element, the thickness is preferably 10 $\mu$m or more and 20 $\mu$m or less.

The porous resin to be formed is not particularly limited. For securing good liquid or gas permeability, the porous resin preferably has a three-dimensional branched network structure of the cured resin as the backbone and a bicontinuous structure (also referred to as monolith structure) in which multiple pores are continuously coupled to each other. In other words, preferably, the porous resin has multiple pores, each one of the pores is communicated with surrounding pores, and the pores spread three-dimensionally. As the pores are communicated with each other, the liquid or gas permeation is sufficient, and the functions of substance separation or reaction field can be effectively exerted.

One physical property obtained when having a bicontinuous structure is air permeability. The air permeability of the porous resin can be measured according to Japanese Industrial Standards (JIS) P8117. The air permeability is preferably 500 seconds/100 mL or lower, and more preferably 300 seconds/100 mL or lower.

In this case, the air permeability can be measured using a Gurley densometer (manufactured by Toyo Seiki Seisaku-sho, Ltd.) or the like.

The cross-sectional shape of the pores of the formed porous resin may be in various shapes such as a substantially circular shape, a substantially elliptical shape and a substantially polygonal shape, and in various sizes. Here, the size of the pore refers to the length of the longest portion in the cross-sectional shape of the pore. The size of the pore can be determined from a cross-sectional image taken with a scanning electron microscope (SEM). The size of the pores of the porous resin is not particularly limited. In view of liquid or gas permeability, the size of the pores is preferably 0.01 $\mu$m or larger and 10 $\mu$m or smaller. The porosity of the porous resin is preferably 30% or higher, and more preferably 50% or higher. A method for adjusting the pore size and the porosity of the porous resin to the above-described ranges is not particularly limited. Examples of the method may include a method of adjusting the content of the polymerizable compound X in the liquid composition X, a method of adjusting the content of the porogen in the liquid composition X, a method of adjusting the irradiation condition of active energy rays, and the like.

«Applications of Porous Resin»

<Application for Power Storage Element or Power Generation Element>>

The porous resin formed using the liquid composition set of the present disclosure can be used e.g. as an insulating layer for power storage elements or power generation elements. In other words, the liquid composition set of the present disclosure can be used for producing an insulating layer in power storage elements or power generation elements. When used in these applications, for example, the insulating layer (i.e., separator) is preferably formed by sequentially applying the liquid composition Y and the liquid composition X onto an active material layer that has been formed on an electrode substrate in advance.

As an example of the insulating layer for power storage elements or power generation elements, for example, a film-like porous insulating layer or the like having pores of a predetermined size or a predetermined porosity are known. On the other hand, the liquid composition set of the present disclosure can improve the degree of freedom in designing power storage elements and power generation elements in terms of their performances, by appropriately adjusting the content of the polymerizable compound X, the content of the porogen, the irradiation condition of active energy rays, etc., to appropriately change the pore size and the porosity. In addition, the liquid composition set of the present disclosure can be applied by various methods, such as inkjet methods, and can improve the degree of freedom in designing power storage elements and power generation elements in terms of their shapes. The liquid composition set of the present disclosure is used such that the liquid composition X is applied to the region of the active material layer to which the liquid composition Y has been applied. Therefore, the liquid composition X is cured to form a porous resin without excessively entering the active material layer. As a result, a decrease in the function of the active material layer is suppressed.

Here, the insulating layer is a member that separates a positive electrode and a negative electrode from each other and secures ionic conductivity between the positive electrode and the negative electrode. In the present disclosure, the insulating layer is not limited to the insulating layer having a layer shape.

The liquid composition set of the present disclosure can additionally form an insulating layer (i.e., second insulating layer) formed of a porous resin layer when being applied onto another insulating layer (i.e., first insulating layer) for power storage elements or power generation elements. When the second insulating layer is formed over the first insulating layer, various functions of the entire insulating layers, such as heat resistance, impact resistance and high-temperature shrinkage resistance, can be added or improved.

The electrode substrate is not particularly limited as long as the electrode substrate has conductivity. Generally, it is possible to use aluminum foil, copper foil, stainless steel foil, and titanium foil, each of which is suitably used for secondary batteries and capacitors generally serving as power storage elements, particularly for lithium ion secondary batteries, as well as an etched foil with fine holes formed by etching the above foils, a perforated electrode substrate used for lithium ion capacitors, and the like. Also, it is possible to use an electrode substrate in which a carbon paper fibrous electrode used for power generation elements such as fuel cells is in a non-woven or woven planar form, and an electrode substrate having fine holes among the above-described perforated electrode substrates. Moreover, for solar devices, in addition to the above-described electrode, is possible to use a flat substrate made of glass, plastic or the like on which a transparent semiconductor thin film of indium-titanium oxide, zinc oxide or the like is formed, or a substrate on which a thin conductive electrode film is deposited.

The active material layer is formed by dispersing a powdery active material or catalyst composition in a liquid, applying the liquid onto the electrode substrate, and fixing and drying the liquid. Generally, the active material layer is formed by printing using a spray, dispenser, or die coater, or pull-up coating, and after the application, drying the liquid.

The positive electrode active material is not particularly limited as long as the positive electrode active material can reversibly occlude and release alkali metal ions. Typically, alkali-metal-containing transition metal compounds may be used as the positive electrode active material. Examples of lithium-containing transition metal compounds may include composite oxides including lithium together with at least one element selected from a group consisting of cobalt, manganese, nickel, chromium, iron, and vanadium. Examples of such composite oxides may include lithium-containing transition metal oxides such as lithium cobalt oxide, lithium nickel oxide, and lithium manganese oxide; olivine type lithium salts such as $LiFePO_4$; chalcogen compounds such as titanium disulfide and molybdenum disulfide; manganese dioxide; and the like. The lithium-containing transition metal oxides refer to metal oxides containing lithium and a transition metal, or metal oxides in which a part of the transition metal is substituted with a heteroelement. Examples of the heteroelement may include Na, Mg, Sc, Y, Mn, Fe, Co, Ni, Cu, Zn, Al, Cr, Pb, Sb, B and the like. Above all, Mn, Al, Co, Ni, and Mg are preferable. One type of heteroelement may be used alone, or two or more types of heteroelements may be used in combination. One type of the above-described positive electrode active material may be used alone, or two or more types of the above-described positive electrode active materials may be used in combination. Examples of the active material for nickel metal hydride batteries may include nickel hydroxide and the like.

The negative electrode active material is not particularly limited as long as the negative electrode active material can reversibly occlude and release alkali metal ions. Typically, carbon materials including graphite having a graphite crystal structure may be used as the negative electrode active material. Examples of such carbon materials may include natural graphite, spherical or fibrous synthetic graphite, poorly-graphitizable carbon (hard carbon), easily-graphitizable carbon (soft carbon) and the like. Other than the carbon materials, lithium titanate may also be used. For improving energy density of lithium ion batteries, high capacity materials such as silicon, tin, silicon alloy, tin alloy, silicon oxide, silicon nitride, and tin oxide can also be suitably used as the negative electrode active material.

Examples of the active material in nickel metal hydride batteries may include AB2-type and A2B-type hydrogen storage alloys.

For the binder of the positive electrode or negative electrode, for example, it is possible to use PVDF (polyvinylidene fluoride), PTFE (polytetrafluoroethylene), polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropolypropylene, styrene butadiene rubber, carboxymethyl cellulose or the like. Also, it is allowed to use copolymers of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid and hexadiene. In addition, mixtures of two or more materials selected from these materials may also be used. For conducting agents contained in the electrode, for example, it is allowed to use graphites such as natural graphite and synthetic graphite; carbon blacks such as acetylene black, Ketjen black, channel black, furnace black, lamp black and thermal black; conductive fibers such as carbon fibers and metal fibers; carbon fluoride; powders of metals such as aluminum; conductive whiskers such as zinc oxide and potassium titanate; conductive metal oxides such as titanium oxide; organic conductive materials such as phenylene derivatives and graphene derivatives; or the like.

Generally, in fuel cells, the active material serves as a catalyst for the cathode electrode or the anode electrode. In the catalyst, fine particles of a metal such as platinum, ruthenium and platinum alloy are supported on a catalyst carrier such as carbon. The catalyst particles can be made supported on the surface of the catalyst carrier by suspending the catalyst carrier in water, then adding, to the suspension, precursors of the catalyst particles to make the precursors dissolved in the suspension, and further adding an alkali to produce a hydroxide of the metal and to obtain the catalyst particles supported on the surface of the catalyst carrier. Here, examples of the precursors of the catalyst particles may include alloy components such as chloroplatinic acid, dinitrodiamino platinum, platinum(IV) chloride, platinum(II) chloride, bisacetylacetonato platinum, dichlorodiammine platinum, dichlorotetramine platinum, platinum sulfate chlororuthenate, hexachloroiridate, hexachlororhodate, ferric chloride, cobalt chloride, chromium chloride, gold chloride, silver nitrate, rhodium nitrate, palladium chloride, nickel nitrate, iron sulfate, and copper chloride. The catalyst carrier is then applied onto the electrode and reduced under a hydrogen atmosphere or the like, thus preparing an electrode having a surface coated with the catalyst particles (active material).

In solar cells or the like, the active material may be tungsten oxide powder, titanium oxide powder, or a semiconductor layer of an oxide such as $SnO_2$, $ZnO$, $ZrO_2$, $Nb_2O_5$, $CeO_2$, $SiO_2$, and $Al_2O_3$ carrying a dye exemplified by compounds such as ruthenium-tris transition metal complex, ruthenium-bis transition metal complex, osmium-tris transition metal complex, osmium-bis transition metal complex, ruthenium-cis-diaqua-bipyridyl complex, phthalocyanine and porphyrin, and organic-inorganic perovskite crystal.

- Solvent X, Solvent Y, and Electrolyte for Use in Power Storage Element -

When the porous resin formed by the liquid composition set is used as an insulating layer for a power storage element, preferably, the solvent X and the solvent Y are also used as components of an electrolytic solution constituting the power storage element. In other words, preferably, the electrolytic solution contains the solvent X, the solvent Y, and an electrolyte to be described later. When the solvent X and the solvent Y are so selected that they are suitable not only for formation of the porous resin but also for components of the electrolytic solution, some processes can be omitted such as a process of removing the solvent X and the solvent Y by heating or the like after formation of the porous resin and another process of separately impregnating the porous resin with the electrolytic solution.

In a case in which the heating is omitted, damage to the porous resin and damage to components other than the porous resin (e.g. electrode substrate, active material layer), which may be caused by heating, can be suppressed. Particularly, as damage to the porous resin is suppressed, a short circuit in the power storage element and reaction unevenness at the time of driving the power storage element can be suppressed, and the performance of the power storage element is further improved.

Even when the heating is performed as the process of removing the solvent X and the solvent Y, the solvent X and the solvent Y may partially remain in the porous body. Such residual solvent X and solvent Y may generate gas due to an unexpected side reaction inside the power storage element and degrade the performance of the power storage element. However, when selecting the solvent X and solvent Y usable as components of the electrolyte solution (e.g.

components that hardly degrade the performance of the power storage element due to a side reaction or the like), degradation of the performance can be suppressed.

In a case in which the porous resin is used as an insulating layer for a power storage element, preferably, the solvent X and the solvent Y are independently selected from solvents which suppress the occurrence of decomposition reaction or generation of gas at the time of using (i.e., charging and discharging) the power storage element. For example, it is possible to use propylene carbonate, ethyl methyl carbonate, dimethyl carbonate, ethylene carbonate, acetonitrile, γ-butyrolactone, sulfolane, dioxolane, tetrahydrofuran, 2-methyltetrahydrofuran, dimethylsulfoxide, 1,2-dimethoxyethane, 1,2-ethoxymethoxyethane, polyethylene glycol, alcohols, mixtures thereof, or the like. Above all, it is preferable to use at least one selected from propylene carbonate, ethyl methyl carbonate, dimethyl carbonate, and ethylene carbonate.

Preferably, the solvent X and the solvent Y which do not require the process of removing the solvents by the heating or the like after formation of the porous resin have higher boiling points than those of the solvent X and the solvent Y which require the process of removing the solvents by the heating or the like. When the boiling points are high, vaporization of the solvent X and the solvent Y is suppressed during the production process, and the composition of the electrolytic solution is suppressed from changing from an initially assumed composition. Specifically, the boiling point is preferably 80°C or higher, more preferably 85°C or higher, and even more preferably 90°C or higher. Note that the boiling point of propylene carbonate is 240°C, the boiling point of ethyl methyl carbonate is 107°C, the boiling point of dimethyl carbonate is 90°C, and the boiling point of ethylene carbonate is 244°C.

When using the solvent X and the solvent Y which also function as components of the electrolytic solution constituting the power storage element as described above, it is preferable that the porous resin producing apparatus 100 in FIG. 1 is free of the heating process unit 30.

As described above, the electrolyte is a component used in a case in which the porous resin formed by the liquid composition set is used as an insulating layer for a power storage element, or the like. Examples of the electrolyte may include solid electrolytes soluble in the solvent X and the solvent Y, liquid electrolytes such as ionic liquids, and the like. When the electrolyte is contained in the liquid composition X or the liquid composition Y, residual components including the solvent X, the solvent Y and the electrolyte remaining after formation of the porous resin can function as the electrolytic solution in the power storage element. Thus, some processes can be omitted such as a process of removing the solvent X and the solvent Y by heating or the like after formation of the porous resin and another process of separately impregnating the porous resin with the electrolytic solution.

In a case in which the heating is omitted, damage to the porous resin and damage to components other than the porous resin (e.g. electrode substrate, active material layer), which may be caused by heating, can be suppressed. Particularly, as damage to the porous resin is suppressed, a short circuit in the power storage element and reaction unevenness at the time of driving the power storage element can be suppressed, and the performance of the power storage element is further improved.

Even when the process in which the solvent X and the solvent Y are removed by heating is conducted, the solvent X and the solvent Y may partially remain in the porous body. Such residual solvent X and solvent Y may generate gas due to an unexpected side reaction inside the power storage element and degrade the performance of the power storage element. However, when selecting the solvent X and solvent Y usable as components of the electrolyte solution (e.g. components that hardly degrade the performance of the power storage element due to a side reaction or the like), degradation of the performance can be suppressed.

The solid electrolytes are not particularly limited as long as they are soluble in the solvent X and the solvent Y. For example, it is possible to use inorganic ion salts such as alkali metal salts and alkali-earth metal salts; quaternary ammonium salts; supporting salts of acids; supporting salts of alkalis; or the like. Specific examples of the solid electrolytes may include $LiClO_4$, $LiBF_4$, $LiAsF_6$, $LiPF_6$, $LiCF_3SO_3$, $LiCF_3COO$, $KCl$, $NaClO_3$, $NaCl$, $NaBF_4$, $NaSCN$, $KBF_4$, $Mg(ClO_4)_2$, $Mg(BF_4)_2$ and the like.

Examples of the liquid electrolytes may include various ionic liquids containing a cationic component and an anionic component. Preferably, the ionic liquids can be maintained in a liquid state in a wide temperature range including room temperature.

Examples of the cationic component may include: imidazole derivatives such as N,N-dimethylimidazole salt, N,N-methylethyl imidazole salt and N,N-methylpropyl imidazole salt; aromatic salts of pyridinium derivatives or the like, such as N,N-dimethyl pyridinium salt and N,N-methylpropyl pyridinium salt; aliphatic quaternary ammonium compounds of tetraalkylammonium or the like, such as trimethylpropyl ammonium salt, trimethylhexyl ammonium salt and triethylhexyl ammonium salt; and the like.

For stability in the atmosphere, preferable examples of the anionic component may include fluorine-containing compounds such as $BF_4^-$, $CF_3SO_3^-$, $PF_4^-$, $(CF_3SO_2)_2N^-$ and $B(CN_4)^-$.

The content of the electrolyte is not particularly limited and can be appropriately selected depending on the intended purpose. The content of the electrolyte in the electrolytic solution is preferably 0.7 mol/L or more and 4.0 mol/L or less, more preferably 1.0 mol/L or more and 3.0 mol/L or less, and for achieving a good balance between the capacity and the output of the power storage element, even more preferably from 1.0 mol/L or more and 2.5 mol/L or less.

EXAMPLES

Examples according to the present invention will be explained below, and the present invention is not limited to Examples at all.

<Example 1>

The liquid composition X and the liquid composition Y were prepared by mixing materials in the proportions described below.

- Liquid Composition X -

- Polymerizable compound X (Ebecryl 130, tricyclodecane dimethanol diacrylate, (manufactured by DAICEL-ALLNEX LTD., described as "DCP" in Tables 1 and 2)): 29.0 parts by mass
- Solvent X (dipropylene glycol monomethyl ether (manufactured by Tokyo Chemical Industry Co., Ltd., described as "DMP" in Tables 1 and 2)): 70.0 parts by mass
- Polymerization initiator (Omnirad 184, 1-hydroxycyclohexylphenyl ketone (manufactured by IGM Resins B.V., described as "Omni 184" in Tables 1 and 2)): 1.0 parts by mass
- Surfactants (TEGO Twin 4000, siloxane-based gemini type surfactant (manufactured by Evonik Industries AG, described as "Twin 4000" in Tables 1 and 2)): 0.5 parts by mass

- Liquid Composition Y -

- Solvent Y (dipropylene glycol monomethyl ether (manufactured by Tokyo Chemical Industry Co., Ltd., described as "DPM" in Tables 1 and 2): Total amount

<Examples and Comparative Examples>

In Example 1, the liquid composition X and the liquid composition Y in Examples and Comparative Examples were prepared in the same manner as in Example 1 except for changing the compositions to those in Tables 1 and 2. In Tables 1 and 2, the unit for each numerical value of the compositions is "parts by mass".
The details of the various materials used in Examples and Comparative Examples presented in Tables 1 and 2 are as follows.

- Surfactant (MEGAFACE RS-76-NS, having polymerizable functional groups (manufactured by DIC Corporation, described as "RS-76" in Tables 1 and 2))
- Surfactant (KF-6020, polyether-modified silicone oil (Shin-Etsu Silicone))

Next, the surface tensions of the liquid composition X and the liquid composition Y in Examples and Comparative Examples were measured at 24°C according to a plate method, as described below. The results are presented in Tables 1 and 2.
For the liquid composition X in Examples and Comparative Examples, a dynamic surface tension $X_{15}$ at a bubble lifetime of 15 milliseconds and at 24°C according to a maximum bubble pressure method, a dynamic surface tension $X_{150}$ at a bubble lifetime of 150 milliseconds and at 24°C according to the maximum bubble pressure method, and a dynamic surface tension $X_{1500}$ at a bubble lifetime of 1500 milliseconds and at 24°C according to the maximum bubble pressure method were measured as described below. The results are presented in Tables 1 and 2.

[Measurement of Surface Tension According to Plate Method]

Based on the plate method, the surface tensions were measured using a platinum plate by an automatic surface tensiometer (DY-300, manufactured by Kyowa Interface Science Co., Ltd.) at 24°C. The measurement was performed one minute after injection of the liquid composition into a petri dish.

[Measurement of Dynamic Surface Tension According to Maximum Bubble Pressure Method]

Dynamic surface tensions were measured using a dynamic surface tensiometer (DynoTesterm, manufactured by SITA Messtechnik GmbH) at the time of 15 milliseconds, the time of 150 milliseconds and the time of 1500 milliseconds, and at 24°C.

Subsequently, in each of Examples and Comparative Examples, a negative electrode for a power storage element having, as a separator, a porous resin formed using the liquid composition set was prepared. Then, the surface uniformity (exposure ratio of the base), the streaks (grooves) and the film thickness of the formed porous resin were evaluated.

<Preparation of Negative Electrode Having Porous Resin>

- Preparation of Electrode Composite Portion -

For an electrode composite portion, a 21 $\mu$m-thick copper foil as the current collecting foil was used, which was coated with a graphite having a porosity of 16.5 cc/m$^2$ as the active material layer. Specifically, 97.0 parts by mass of graphite particles (average particle size: 10 $\mu$m) as a negative electrode active material, 1.0 parts by mass of cellulose as a thickener, and 2.0 parts by mass of an acrylic resin as a binder were uniformly dispersed to obtain a negative electrode active material dispersion. The dispersion was applied onto a 21 $\mu$m-thick copper foil as the current collecting foil, the resulting coating film was dried at 120°C for 10 minutes, and then pressed to obtain the electrode composite portion.

- Preparation of Porous Resin (Separator) -

The liquid composition X and liquid composition Y contained in the liquid composition sets of Examples and Comparative Examples were charged into an inkjet discharging device as illustrated in FIG. 1, including an inkjet head for the liquid composition X (MH 5420, manufactured by Ricoh Company, Ltd.), an inkjet head for the liquid composition Y (MH 5420, manufactured by Ricoh Company, Ltd.) and a UV-LED light source (wavelength: 365 nm).

Subsequently, the liquid composition Y and the liquid composition X were discharged in this order onto the electrode composite portion while conveying the prepared electrode composite portion at a conveying speed of 50 mm/sec. At this time, the liquid composition X was applied to a region to which the liquid composition Y had been discharged. The liquid composition Y was discharged at 1000 Hz (508 dpi, 16.5 cc/m$^2$) and the liquid composition X was discharged at 1300 Hz (660 dpi, 10.0 cc/m$^2$).

Subsequently, the electrode composite portion onto which the liquid composition Y and the liquid composition X had been discharged in this order was inserted into an exposure portion located at a distance of 400 mm along the conveyance direction from the center of the inkjet head for the liquid composition X. Then the electrode composite portion was irradiated with UV. The irradiation intensity of UV was 30 mW/cm$^2$ and the irradiation time was 30 seconds. The exposure portion had been nitrogen-purged in advance.

Then, the electrode composite portion was placed on a hot plate at 130°C for one minute to volatilize the solvents derived from the liquid composition X and the liquid composition Y to obtain a negative electrode in which the porous resin (separator) and the electrode composite portion are integrated.

In the porous resin (separator) formed using the liquid composition set in Examples, pores with diameters of 0.01 $\mu$m or larger and 10 $\mu$m or smaller were observed. The porous resin had a porosity of 30.0% or higher and a bicontinuous structure in which multiple pores in the resin were continuously coupled to each other.

[Evaluation of Surface Uniformity (Exposure of Base)]

The prepared negative electrode was observed using a digital microscope VHX-7000 manufactured by KEYENCE CORPORATION to determine a number of parts where the underlying active material layer is exposed (also called "number of defects") and a ratio of the area of the exposed active material layer to the observed area (also referred to as "ratio of exposure defects"). Since the active material layer is black and the porous resin (separator) is white, parts where the active material layer is exposed can be easily detected from the contrast of black and white. The evaluation area was 23 cm$^2$. The determined number of defects and ratio of exposure defects were evaluated according to the following evaluation criteria.

Also, considering cleanliness of the experimental environment and fragments generated during cutting of samples, the number of defects is preferably less than 10. Since a high ratio of exposure defects may decrease the insulating capability of the separator and may cause a short circuit of the battery, a low ratio of exposure defects is preferable.

Evaluation Criteria

A: The ratio of exposure defects is 0.2% or lower and the number of defects with exposure of 50 $\mu$m or smaller is less than 10.
B: The ratio of exposure defects is 0.2% or lower and the number of defects with exposure of 50 $\mu$m or smaller is 10 or more.
C: The ratio of exposure defects is higher than 0.2% and 2.0% or lower.
D: The ratio of exposure defects is higher than 2.0%.

[Evaluation of streak (groove)]

The streaks generated at an interval of 300 dpi (85 $\mu$m) on the porous resin (separator) of the prepared negative electrode and parallel to the printing direction were evaluated. The streaks were generated in the printing direction, despite the fact that the streaks were prepared in a printing condition with a printing-direction dot density of 660 dpi and an orthogonal-direction dot density of 1200 dpi, where the orthogonal-direction dot density was higher. The streaks were visible as a streaky or uneven shape by the naked eye, or as streaks with a see-through lower layer by an optical microscope, or as grooves with a high porosity by an SEM. The presence of the streaks was confirmed by the naked eye and a microscope (digital microscope VHX-7000 manufactured by KEYENCE CORPORATION) and evaluated according to the following evaluation criteria. Since large streaks (grooves) may cause short-circuit of the battery, it is preferable that streaks (grooves) are absent or negligible.

(Evaluation Criteria)

A+: Streaks or unevenness is invisible by the naked eye.
A: Unevenness is visible by the naked eye, and thin streaks not continuously joined in lines are visible by an optical microscope.
A-: Unevenness is visible by the naked eye, and streaks continuously joined in lines are visible by an optical microscope.
B: Streaks are visible by the naked eye, and thick and transparent streaks are visible by an optical microscope.
C: Transparent streaks equivalent to the exposure of the underlying active material layer are visible by an optical microscope

[Evaluation of Film Thickness]

MDH-25MB (manufactured by Mitutoyo Corporation) was used to measure the film thickness. The film thickness of the porous resin (separator) was determined from the difference in the film thickness between before and after printing (before and after preparation of the porous resin) to evaluate the film thickness according to the following evaluation criteria. When the liquid composition X is applied at 10 cc/m$^2$ onto an impermeable substrate, the resultant porous resin has a film thickness of 10 $\mu$m (theoretical value). If the measured film thickness is too thin with respect to this film thickness (theoretical value), the recesses and projections of the active material layer may penetrate the porous resin (separator), and therefore it is preferable that the measured film thickness is close to the film thickness (theoretical value).

(Evaluation Criteria)

A+: The film thickness is 9 $\mu$m or larger.
A: The film thickness is 6 $\mu$m or larger and smaller than 9 $\mu$m.
B: The film thickness is 3 $\mu$m or larger and smaller than 6 $\mu$m.
C: The film thickness is smaller than 3 $\mu$m.

## Table 1

| | | | | Examples | | | | | | | |
|---|---|---|---|---|---|---|---|---|---|---|---|
| | | | | 1 | 2 | 3 | 4 | 5 | 6 | 7 | 8 |
| Set (formulation) | Liquid composition X | Polymerizable compound X | DCP | 29.0 | 29.0 | 29.0 | 29.0 | 29.0 | 29.0 | 29.0 | 29.0 |
| | | Polymerization initiator | Omni184 | 1.0 | 1.0 | 1.0 | 1.0 | 1.0 | 1.0 | 1.0 | 1.0 |
| | | Solvent X | DPM | 70.0 | 70.0 | 70.0 | 70.0 | 70.0 | 70.0 | 70.0 | 70.0 |
| | | Surfactant | Twin 4000 | 0.50 | 0.20 | 0.05 | | | | | |
| | | | RS-76 | | | | 0.50 | 0.20 | | | |
| | | | KF6020 | | | | | | 0.10 | 0.02 | 0.01 |
| | Liquid composition Y | Solvent Y | DPM | Total amount | Total amount | Total amount | Total amount | Total amount | Total amount | Total amount | Total amount |
| Physical property | Liquid composition X | Dynamic surface tension $X_{15}$ | | 31.2 | 31.7 | 32.3 | 32.2 | 32.1 | 31.3 | 32.3 | 32.3 |
| | | Dynamic surface tension $X_{150}$ | | 28.0 | 28.6 | 29.4 | 29.2 | 29.2 | 27.0 | 29.2 | 29.4 |
| | | Dynamic surface tension $X_{1500}$ | | 27.3 | 28.0 | 28.9 | 27.9 | 28.9 | 24.2 | 28.2 | 28.6 |
| | | Surface tension X according to plate method | | 28.5 | 29.4 | 30.1 | 23.6 | 25.5 | 23.3 | 24.8 | 25.6 |
| | Liquid composition Y | Surface tension Y according to plate method | | 29.3 | 29.3 | 29.3 | 30.3 | 29.3 | 29.3 | 29.3 | 29.3 |
| | | Equation (1) | | 2.0 | 1.3 | 0.4 | 2.4 | 0.4 | 5.1 | 1.1 | 0.7 |
| | | Equation (2) | | 2.5 | 2.5 | 2.4 | 1.7 | 2.6 | 1.5 | 2.1 | 2.1 |
| | | Equation (3) | | 0.8 | -0.2 | -0.8 | 6.7 | 3.8 | 6.0 | 4.5 | 3.7 |
| Evaluation | | Surface uniformity (Ratio of exposure defects) | | A 0.0% | A 0.0% | B 0.1% | A 0.0% | A 0.2% | A 0.0% | A 0.0% | A 0.0% |
| | | Streak (groove) | | A | A | A | B | A- | C | C | B |
| | | Film thickness | | A+ | A+ | A+ | A+ | A+ | B | B | A |

## Table 2

| | | | | Comparative Examples | | | | |
|---|---|---|---|---|---|---|---|---|
| | | | | 1 | 2 | 3 | 4 | 5 |
| Set (formulation) | Liquid composition X | Polymerizable compound X | DCP | 29.0 | 29.0 | 29.0 | 29.0 | 29.0 |
| | | Polymerization initiator | Omni184 | 1.0 | 1.0 | 1.0 | 1.0 | 1.0 |
| | | Solvent X | DPM | 70.0 | 70.0 | 70.0 | 70.0 | 70.0 |
| | | Surfactant | Twin4000 | 0.03 | | | | |
| | | | RS-76 | | | 0.10 | 0.05 | |
| | | | KF6020 | | | | | 0.005 |
| | Liquid composition Y | Solvent Y | DPM | Total amount | Total amount | Total amount | Total amount | Total amount |
| Physical property | Liquid composition X | Dynamic surface tension $X_{15}$ | | 32.7 | 32.7 | 32.2 | 32.6 | 32.3 |
| | | Dynamic surface tension $X_{150}$ | | 29.5 | 29.6 | 29.5 | 29.6 | 29.4 |
| | | Dynamic surface tension $X_{1500}$ | | 29.0 | 29.5 | 29.0 | 29.3 | 29.0 |
| | | Surface tension X according to plate method | | 30.4 | 30.7 | 27.0 | 27.8 | 27.7 |
| | Liquid composition Y | Surface tension Y according to plate method | | 29.3 | 29.3 | 29.3 | 29.3 | 29.3 |
| | | Equation (1) | | 0.3 | -0.2 | 0.3 | 0.0 | 0.3 |
| | | Equation (2) | | 2.7 | 3.0 | 2.2 | 2.7 | 2.5 |
| | | Equation (3) | | -1.2 | -1.4 | 2.3 | 1.5 | 1.6 |
| Evaluation | | Surface uniformity (Ratio of exposure defects) | | C 0.7% | D 7.8% | D 4.4% | D 8.5% | C 1.6% |
| | | Streak (groove) | | A | A+ | A | A | A- |
| | | Film thickness | | A+ | A+ | A+ | A+ | A+ |

Examples 1 to 8 satisfy equation (1), and therefore the porous resins have superior surface uniformity. On the other hand, Comparative Examples 1 to 5 do not satisfy equation (1), and therefore the porous resins have inferior surface uniformity.

Although the same type of surfactant is used for Examples 1 to 3 and Comparative Example 1, for Examples 4 to 5 and Comparative Examples 3 to 4, and for Examples 6 to 8 and Comparative Example 5 respectively. If the amount of the added surfactant is in an inappropriate range, equation (2) or equation (3) is not satisfied, lowering evaluation of the streaks (grooves).

The surfactants used in Examples 6 to 8 and Comparative Example 5 are difficult to satisfy equation (2), which makes it difficult to achieve high evaluation both for the surface uniformity and for the streaks (grooves) and the film thickness.

## Claims

1. A liquid composition set comprising:

   a liquid composition X to form a porous resin, the liquid composition X containing a polymerizable compound X and a solvent X; and
   a liquid composition Y containing a solvent Y,
   wherein a surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the following equation (1):

$$\text{Surface tension Y} - \text{Dynamic surface tension } X_{1500} \geq 0.4 \text{ mN/m ... Equation (1)}.$$

2. The liquid composition set according to claim 1,

   wherein the liquid composition X further contains a surfactant, and
   wherein a dynamic surface tension $X_{15}$ of the liquid composition X at a bubble lifetime of 15 milliseconds and at 24°C according to the maximum bubble pressure method, a dynamic surface tension $X_{150}$ of the liquid composition X at a bubble lifetime of 150 milliseconds and at 24°C according to the maximum bubble pressure method, and the dynamic surface tension $X_{1500}$ satisfy the following equation (2):

$$(\text{Dynamic surface tension } X_{15} - \text{Dynamic surface tension } X_{150}) - (\text{Dynamic surface tension } X_{150} - \text{Dynamic surface tension } X_{1500}) \geq 2.3 \text{ mN/m ... Equation (2)}.$$

3. The liquid composition set according to claim 1 or 2, wherein a surface tension X of the liquid composition X at 24°C according to the plate method and the surface tension Y satisfy the following equation (3):

$$\text{Surface tension Y} - \text{Surface tension X} \leq 3.0 \text{ mN/m ... Equation (3)}.$$

4. The liquid composition set according to any one of claims 1 to 3,

   wherein the polymerizable compound X is compatible with the solvent X, and
   wherein the porous resin is a polymer X incompatible with the solvent X, generated in a process of polymerizing the polymerizable compound X.

5. The liquid composition set according to any one of claims 1 to 4,
   wherein the liquid composition X is applied to a region to which the liquid composition Y has been applied.

6. The liquid composition set according to any one of claims 1 to 5,
   wherein the porous resin has pores with diameters of 0.01 $\mu$m or larger and 10 $\mu$m or smaller.

7. The liquid composition set according to any one of claims 1 to 6,
   wherein the porous resin has a porosity of 30% or higher.

8. The liquid composition set according to any one of claims 1 to 7,

wherein the porous resin has a bicontinuous structure with multiple pores continuously coupled to each other.

9. The liquid composition set according to any one of claims 1 to 8,
   wherein the porous resin is formed on a porous substrate.

10. The liquid composition set according to claim 9,
    wherein the porous substrate comprises an active material layer.

11. A porous resin producing apparatus (100) comprising:

    an accommodating container Y (1b) containing a liquid composition Y (7) containing a solvent Y;
    an application device Y (1a) configured to apply the liquid composition Y (7) contained in the accommodating container Y (1b);
    an accommodating container X (1b) containing a liquid composition X (7) containing a polymerizable compound X and a solvent X;
    an application device X (1a) configured to apply the liquid composition X (7) contained in the accommodating container X (1b) to a region to which the liquid composition Y has been applied; and
    a curing device (2a) configured to cure the applied liquid composition X,
    wherein a surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the following equation (1):

$$\text{Surface tension Y} - \text{Dynamic surface tension } X_{1500} \geq 0.4 \text{ mN/m ... Equation (1).}$$

12. The porous resin producing apparatus (100) according to claim 11,
    wherein the application device Y (1a) is configured to apply the liquid composition Y (7) to a porous substrate (4).

13. The porous resin producing apparatus (100) according to claim 12,
    wherein the porous substrate (4) comprises an active material layer.

14. The porous resin producing apparatus (100) according to any one of claims 11 to 13,
    wherein the application device X (1a) is configured to discharge the liquid composition X (7) by an inkjet method.

15. A method for producing porous resin, the method comprising:

    applying (10) a liquid composition Y containing a solvent Y;
    applying (10) a liquid composition X containing a polymerizable compound X and a solvent X to a region to which the liquid composition Y has been applied; and
    curing (20) the applied liquid composition X,
    wherein a surface tension Y of the liquid composition Y at 24°C according to a plate method and a dynamic surface tension $X_{1500}$ of the liquid composition X at a bubble lifetime of 1500 milliseconds and at 24°C according to a maximum bubble pressure method satisfy the following equation (1):

$$\text{Surface tension Y} - \text{Dynamic surface tension } X_{1500} \geq 0.4 \text{ mN/m ... Equation (1).}$$

Fig. 1

Europäisches
Patentamt

European
Patent Office

Office européen
des brevets

# EUROPEAN SEARCH REPORT

**Application Number**

EP 22 17 7373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 674 333 A2 (RICOH CO LTD [JP]) 1 July 2020 (2020-07-01) * examples 1-4 * * claims 1, 19 * ----- | 1-15 | INV. C08J9/28 H01M50/00 H01M50/414 C08F122/10 C09D11/30 |
| X,P | EP 4 006 088 A1 (RICOH CO LTD [JP]) 1 June 2022 (2022-06-01) * examples 1-2 * * claim 1 * ----- | 1-15 | |

**TECHNICAL FIELDS SEARCHED (IPC)**

C08J
H01M
C08F
C09D

The present search report has been drawn up for all claims

| Place of search | Date of completion of the search | Examiner |
|---|---|---|
| The Hague | 28 October 2022 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 7373

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | | | Publication date | Patent family member(s) | | | Publication date |
|---|---|---|---|---|---|---|---|
| EP 3674333 | A2 | | 01-07-2020 | CN | 111378199 | A | 07-07-2020 |
| | | | | EP | 3674333 | A2 | 01-07-2020 |
| | | | | JP | 7060154 | B2 | 26-04-2022 |
| | | | | JP | 2021088691 | A | 10-06-2021 |
| | | | | JP | 2022008347 | A | 13-01-2022 |
| | | | | JP | 2022103171 | A | 07-07-2022 |
| | | | | KR | 20200080173 | A | 06-07-2020 |
| | | | | KR | 20220113312 | A | 12-08-2022 |
| | | | | US | 2020207881 | A1 | 02-07-2020 |
| | | | | US | 2021284761 | A1 | 16-09-2021 |
| EP 4006088 | A1 | | 01-06-2022 | CN | 114574037 | A | 03-06-2022 |
| | | | | EP | 4006088 | A1 | 01-06-2022 |
| | | | | JP | 2022086043 | A | 09-06-2022 |
| | | | | KR | 20220076356 | A | 08-06-2022 |
| | | | | US | 2022169821 | A1 | 02-06-2022 |

EPO FORM P0459

For more details about this annex : see Official Journal of the European Patent Office, No. 12/82

**EP 4 105 268 A1**

**Patent documents cited in the description**

- JP 4426157 B